# EUROPEAN PATENT SPECIFICATION

(11) **EP 0 829 293 B1**
(45) Date of publication and mention of the grant of the patent: **23.06.2004**
(21) Application number: 97115357.2
(22) Date of filing: 04.09.1997
(51) Int. Cl.: B01D 39/08, B01D 39/16, D01D 5/098, D01F 6/22, D01F 6/38, D04H 1/42, D04H 1/56, B32B 5/26

(54) **Method of making a filter material**
Herstellungsverfahren für ein Filtermaterial
Procédé pour la fabrication d'un matériau filtrant

(30) Priority: 04.09.1996 EE 9600077; 23.12.1996 EE 9600145
(43) Date of publication of application: 18.03.1998
(73) Proprietor: AS Askju, 40202 Estonia (EE)
(72) Inventor: Saakjan, Suren, EE2010 Sillamäe (EE); Belonin, Aleksandr, EE2010 Sillamäe (EE); Pribotkov, Sergei, EE2010 Sillamäe (EE); Stokozov, Igor, EE2010 Sillamäe (EE); Baskakov, Aleksandr, EE2010 Sillamäe (EE); Medvedev, Pjotr, EE2010 Sillamäe (EE); KARAPETJAN, Vanus, EE2010 Sillamäe (EE)
(74) Representative: Shaw, Matthew Nigel

(56) References cited:
- GB-A- 1 044 673
- GB-A- 1 088 012
- GB-A- 1 124 405
- US-A- 4 650 506
- DATABASE WPI Section Ch, Week 9619 Derwent Publications Ltd., London, GB; Class A13, AN 96-186506 XP002047676 & RU 2 042 393 C (TONKAYA OCHISTKA RES. TECH. CENTRE ENTERP.) , 27 August 1995

## Description

This invention relates to the production of filter materials for filtration of finely dispersed substances, and especially, to the production of filter materials for use in personal safety aids, of the type comprising non-woven fine fibrous/micro fibrous materials.

A non-woven filter material made from elastic fibres and containing irregularly located elastic small diameter thermoplastic fibres made by the melt-blown method is well known. Such filter materials may be stretched in practically every direction equally, see for example EP Patent No. 0341874 (1989).

One disadvantage of such a material is its low level of purification from micro particles, such that the material is suitable for "rough" filter parts in respirators only.

A filter material made from fibres having a mean diameter of 5 µm obtained from polypropylene by the melt-blown method is also known. Fibres locate chaotically in this material but the material is characterised by a relatively high purification level of 97 to 99.5% with a pressure drop of 8 to 16 mm water column (water gauge), see for example US Patent No. 4824451 (1989).

A filter material for respirators which is closest to the present invention can be discussed as prior art. This comprises an external and internal protective layer and a working layer laid between them comprising a polymer fibre material having a fibre diameter of 1 to 10 µm, a resistance to air flow/pressure drop of 1 to 25 Pa (at air velocity 1 cm/s) and with surface density of 10 to 50 g/m² where the working layer is made from chlorinated polyvinyl chloride fibres, see for example RU Patent No. 2042394 (1995).

Disadvantages of the two materials discussed above are:
- rapid decrease in filtering properties of the material made from the perchlorovinyl material due to loss of electret charge during its lifetime.
- fibres of the given materials are made from a solution in an electrostatic field where the polymer is dissolved in dichloroethane, leading to usage of a highly active toxic substance, where the material contains up to 5% solvent, and the release of toxic chloro-organic compounds less volatile than dichloroethane, in addition to technical grade dichloroethane (98 to 99% purity) and chlorinated polyvinyl chloride.

The solvent and other volatile chloro-organic substance residues segregate from the fibres of the material over approximately one year, which contaminates filtered air with chloro-organic compounds, as has become evident from research results.

Chloro-organic substances accumulate in organisms of working personnel who use continuously personal safety aids, for example respirators, made from this kind of material to protect respiratory organs.

One aim of the present invention is to provide a non-toxic filter material for aerosol filters (ie, materials for filtering aerosols) and also for personal safety aids to protect respiratory organs, with improved material filtration abilities and production technology.

As regards the method to which this invention also relates, methods for making small diameter elastic thermo plastic fibres for producing a filter material used in respirators by the melt-blown method are known, see for example, EP patent no. 0341874 (1989).

Furthermore, a method for making a filter material from medium diameter fibres by the melt-blown method with subsequent thermal fixing is also known, see for example US patent no. 4824451 (1989).

The disadvantages of the known methods are their limitations in providing a filter material for filtration of finely dispersed aerosols which are suitable only for use with "coarse"/"rough" filters.

A method for making a filter material which is considered closest by its technical matter to the present invention is shown in RU patent no. 2042393 (1993).

The method of RU '393 uses an electrostatic method for fibre formation where fibres are made from the dilution of polystyrene and/or chlorinated polyvinyl chloride in dichloroethane whose dynamic viscosity is 0.05 to 1.5 Pa·s and where the electrical conductivity of the solution is 10⁻⁷ to 10⁻⁴ Ω⁻¹ x cm⁻¹ with volume flow of solution through the fibre forming elements of 10⁻⁴ to 10⁻² cm³/s, and a potential difference of 10 to 70 KV for a single fibre forming (spinning) element. A fine fibrous non-woven filter material is obtained as a result of this method.

A significant disadvantage of the methods given is the high heterogeneity of fibre diameters obtained by formation of the fibres at the air flow region leading to an intensive exhalation (evaporation) of the solvent from the polymer solution forming fibres. A sharp temperature drop occurs in the fibres formed as a result, causing in turn a rapid increase of the solution viscosity leading to a decrease of the fibres' formation speed which in turn increases the fibres' diameter. Air passing the fibre formation zone has a high velocity in accordance with the known methods, required to provide an additional and desirable aerodynamic effect to the fibres. The result of such processes is a heterogeneous influence to the fibres and an increase in the range of diameters of the formed fibres.

Phase alterations are sometimes observed on cooling of the polymer solution, which leads to a decrease in the content of the required polymer solution in the polymer/solvent solution. In effect, the polymer solution is reduced to a gel. The process of the fibre formation is spoiled if the gel gets into the process of the fibre formation. A thickened fibre is obtained instead of a homogeneous liquid thread and a homogeneous dry fibre is obtained containing the remains of the gel particles, in addition to cool but not thoroughly stretched heterogeneous fibres in the air flow.

Together, these factors reduce the filtration abilities of the material and can cause breaking of the fibres.

Solvent vapour segregation (separation) into air takes place during the fibre formation process, carried out in an electrostatic field, and an over-run of the maximum allowable concentration (MAC) of dichloroethane is observed in work places.

Up to 5% of the solvent weight stays in the fibres during the method of manufacture of the filter material and the solvent then segregates (separates) slowly into the surrounding environment.

Air permeating the material made by the method described above contains (as seen from test results) the following substances: dichloroethane, trichloroethane, trichloroacetoaldehyde, pentachloroethane, hexachloroethane, 1,1,1,1-tetrachloroethane, and 1,1,1,2-tetrachloroethane, which occur in compounds of dichloroethane and chlorinated polyvinyl chloride.

Toxic characteristics of the substances are provided in table 1:

**Table 1**

| **Type of Substance** | **Max. Allowable Concentration, mg/m**^{**3**} | **Flash Point, °C** |
|---|---|---|
| 1,2-dichlorocthane | 4(Sweden) | 15 |
| | 10 (Russia) | |
| Trichloroacetoaldehyde | 5 (Russia) | - |
| 1,1,2-trichloroetheane | 45 (USA) | - |
| Tetrachloroethylene | 5 (Russia) | - |
| | 70 (Sweden) | |
| 1,1,2,2-tetrachloroethane | 5 (Russia) | - |
| Pentachloroethane | - | - |
| Hexachloroethane | 10 (Russia) | - |

The slow segregation (release) of the above substances from the filter material mentioned, creates harmful work conditions during processing of the filter material for products, and it is also a problem during use of the material in respiratory tract personal safety aids.

An increased inflammability arises from the usage of a considerable amount of the technological solution on the base of dichloroethane during manufacture.

Polymer fibre material produced in accordance with the invention, made from a SAN copolymer and/or polystyrene, with fibre diameters of 1 to 10 µm, air flow resistance of 1 to 45 Pa (at air flow of 1 cm/s) and surface density of 10 to 80 g/m² may be placed on a woven or non-woven protective layer made from cotton, viscose, wool etc.

Providing an electrostatic charge to the fibres during fabrication of the material enables the filtration parameters of the material to be improved considerably. The chemical structure of the SAN copolymer enables an electrostatic charge to be given to the copolymer, and maintained for a long time, by delocalising the electric charge density in the benzene rings that form part of the polymer structure. Additionally, the acrylonitrile in the polymer chain segment provides high mechanical qualities of the fibre. Thus, the material preferably comprises an electret.

All physical-mechanical properties of the SAN copolymer that are due to its chemical structure enable a non-woven fine fibrous filter material to be obtained which contains a complex of essential qualities, for example, high effectiveness of interception of finely dispersed aerosol particles, low resistance to air flow/pressure drop, sufficient mechanical strength and elasticity, and good chemical stability.

The following examples characterise practical usage of the present invention and its advantages over known materials, wherein example 1 relates to a prior art material and method, and discusses its disadvantages.

### Example 1 (Prior Art)

A material is made from a solution of 10% (weight percentage) chlorinated polyvinyl chloride in dichloroethane, into which 0.05% tetraethyl ammonium iodide is added. The segregation (release) of chlorinated organic substances from the material described was as follows on the basis of tests carried out at the Institute of Chemistry of St Petersburg State University. The test conditions were as follows: mass of testing sample - 0.1 g. Volume of testing sample - 15 ml. Time of exposure - 3 hours. Test temperature: 20°C.

**Table 1**

| **Type of Substance** | **Concentration in Air** | **Toxicity Characteristics and Max - Allowable conc**^{**n**} **(MAC)** |
|---|---|---|
| 1,1,2,2 -Tetrachloroethane | 0.07 mg/m³ | cancer suspect agent |
| | | MAC-5 mg/m³ (Russia) |
| Pentachloroethane | 0.20 mg/m³ | - |
| Hexachloroethane | 0.15 mg/m³ | cancer suspect agent |
| | | MAC-10 mg/m³ (Russia) |
| Trichloroacetoaldehyde | 1.5 mg/m³ | MAC-5 mg/m³ (Russia) |
| 1,2-Dichloroethane | 15 mg/m³ | cancer suspect agent |
| | | MAC-4 mg/m³ (Sweden) |
| | | MAC-10mg/m³ (Russia) |
| 1,1,1,2-Tetrachloroethane | 0.15 mg/m³ | cancer suspect agent |
| | | MAC-5mg/m³ (Russia) |
| Tetrachloroethylene | 0.085 mg/m³ | cancer suspect agent |
| | | Mutagen, MAC 20mg/m³ (Sweden) |
| | | MAC-5mg/m³ (Russia) |
| 1,1,2-Trichloroethane | 1.5 mg/m³ | cancer suspect agent |
| | | MAC-45 mg/m³ (USA) |

Thus, as is clear from the above, the material made in accordance with example 1 releases numerous dangerous chloro-organic substances, many of which are cancer suspect agents and/or mutagens.

Examples 2 to 8, which follow, illustrate properties of filter materials made in accordance with the present invention:

**Table 2**

| **Filtering Efficiency of test aerosols (oil mist) at average diameter of particles 0.28 to 0.34 µm and velocity of air flow 1 cm/s,%, not less (minimum).** | | | | | | | |
|---|---|---|---|---|---|---|---|
| Parameters | Example 2 | Example 3 | Example 4 | Example 5 | Example 6 | Example 7 | Example 8 |
| Density of fibre layer surface, g/m² | 20-30 | 30-40 | 12-18 | 15-25 | 30-40 | 40-60 | 60-80 |
| Pneumatic resistance at filtration, air flow velocity up to 1 cm/s | 3.0 | 6.0 | 6.0 | 8.0 | 15.0 | 30.0 | 45.0 |
| Oil spray filtration efficiency at average diameter of particles 0.28-0.34 µm and velocity 1cm/s,% not less | 96 | 99.5 | 99.5 | 99.7 | 99.99 | 99.995 | 99.999 |
| Average diameter of fibres µm | 7 | 7 | 1.5 | 1.5 | 1.5 | 1.5 | 1.5 |

In the above table, the material of the protective layer may be polypropylene, polyethyleneterephalate, and/or cheesecloth.

The composition of the filter materials given in the examples 2 to 8 above is as follows:
1. Non-woven fine fibrous materials by examples 2 and 3 may contain:
   - styrene/acrylonitrile (SAN) copolymer - eg Starex (trade mark) SAN HF-5661 H,Cl, and polystyrene, eg, Starex (trade mark) HF-2660,Cl, in weight proportion 1:1, or
   - styrene/acrylonitrile (SAN) copolymer, eg, Starex (trade mark) SAN HF-5661H,Cl or
   - polystyrene, eg Starex (trade mark) HF -2660,Cl
2. Non-woven fine fibrous materials in accordance with examples 4 to 8 may contain:
   - styrene/acrylonitrile copolymer, eg Starex (trade mark) HF-5661H,Cl.

It has been found that the following substances segregate from the materials described (as shown in examples 2 to 8) on the basis of tests carried out at the Institute of Chemistry of St Petersburg State University, under the same test conditions as those described in relation to example 1.

| Type of Substance | Concentration in Air | Maximum Allowable Concⁿ |
|---|---|---|
| ethyl acetate | 0.20 mg/m³ | MAC-200 mg/m³ (Russia) |
| | | MAC-500 mg/m³ (Sweden) |
| butyl acetate | 40.0 mg/m³ | MAC-200 mg/m³ (Russia) |
| | | MAC-500 mg/m³ (Sweden) |
| | | MAC-900 mg/m³ (USA) |

Thus, as seen from the substances released from the material in accordance with the present invention, the material has a high effectiveness of air purification from dust, smoke, gases, and sprayed liquids as a result of high homogeneity of the filter material working layer, and due to a high permanence of an electret charge, ensuring a very suitable filtering co-efficiency of aerosol substances at low resistance to air/pressure drop, whilst avoiding releasing harmful substances as has been the case with previously known materials.

According to the invention, there is provided a method for making a fine fibrous/micro fibrous filter material with fibres having a stable electret charge wherein fibres are formed in an electrostatic field from a solution having a solution dynamic viscosity of 0.1 to 3.5 Pa·s, a solution electrical conductivity of 10⁻⁸ to 10⁻⁴ Ω⁻¹ x cm⁻¹, a potential difference of 25 to 150 KV, and a volume flow of solution of 10⁻³ to 2 x 10⁻² cm³ x s⁻¹ per fibre forming element, and wherein additional processing of the fibres takes place using saturated vapours of the solution in the fibre formation zone.

The result of making homogeneous diameter fine fibres, and reducing their toxic components' content is best achieved if the fibres are formed from a solution containing a fibre forming polymer, a solvent, and a regulator of electric conductivity, in the following weight proportion:
polymer forming the fibre - 5 to 35%;
regulator of electric conductivity - 0.001 to 1%;
remainder solvent.

Chlorinated polyvinyl chloride and/or polystyrene and/or styrene/acrylonitrile copolymer may be used as the fibre forming polymer. A mixture of ethyl acetate, butyl acetate, and ethanol may be used as the solvent in the following weight proportion:
ethyl acetate: 0 to 30%;
ethanol: 0 to 10%;
butyl acetate remainder.

A highly effective filter material having low resistance to air flow due to homogeneous diameter fine fibres and due to their having a permanent electret charge may thus be obtained.

Usage of the polymers above forming the fibres in the described method enables a fine fibrous non-woven material to be obtained in the electrostatic field having a range of useful qualities (high effectiveness of interception of finely dispersed aerosols, low resistance to air flow permeating into it, sufficient mechanical strength and elasticity, and good chemical stability), all of which are necessary for a good filter material.

Chosen parameters for the technological process (viscosity, electrical conductivity, volume flow of solution and voltage of electrostatic field) guarantee its stable trend and high productivity where high homogeneity of the fibres and reduction of fibre diameter is achieved, due to their additional processing with saturated vapours of the solvent at the fibres' formation zone.

Use of butyl acetate, a relatively low toxic substance as the main solvent, enables work conditions to be improved, reduces disadvantageous influences to the surrounding environment, and reduces inflammability at the same time.

Characterisation of the solvent components is given in table 2.

**Table 2**

| **Component of Solvent** | **Maximum allowable Conc**^{**n**} **(mg/m**^{**3**}**)** | **Flash Point, °C** |
|---|---|---|
| Butyl acetate | 200 (Russia) | 22 |
| | 500 (Sweden) | |
| | 900 (USA) | |
| Ethyl acetate | 200 (Russia) | -3 |
| | 500 (Sweden) | |
| Ethanol | 1000 (Russia) | 13 |
| | 1900 (Sweden) | |

There now follow examples showing practical usage of the introduced fine fibrous non-woven filter material and showing its advantages over known methods and materials, wherein example 1 relates to a prior art method and materials, and discusses their disadvantages.

### Example 1

A solution is made containing 10% by weight chlorinated polyvinyl chloride, 0.05% by weight tetraethyl ammonium iodide, and the remainder dichloroethane. Formation of the fibres takes place in an electrostatic field where the volume flow of solution per fibre forming element (spinning element/yarn die) is 0.003 cm³/s and the voltage of the electrostatic field is 100 KV. A filter material thus obtained is thus characterised by air flow resistance/ pressure drop of 1.5 Pa and aerosol filtering efficiency of 99.9%. The concentration of dichloroethane at the work place is 25 mg/m³, such that work conditions are noxious. Dichloroethane vapours at 10 mg/m³, trichloroacetoaldehyde at 1.0 mg/m³, 1,1,2-trichloroethane at 1.0 mg/m³, 1,1,1,2-tetrachloroethane at 0.01 mg/m³, and 1,1,2,2-tetrachloroethane at 0.06 mg/m³ are segregated from the filter material into the surrounding environment over a long period, the concentrations having been measured in special tests under laboratory conditions. Clearly therefore fibres manufactured using, inta alia, chlorinated polyvinyl chloride produce dangerous by-products which may be released into the environment.

### Example 2 (incorporating the present invention)

The following solution is made: copolymer SAN (styrene/acrylonitrile) 25 weight %, chloride ion 0.05 weight %, ethanol 1.0 weight %, and butyl acetate remainder (ie, 73.95 weight %). The viscosity of the solution is 1 Pa·s, and the electrical conductivity is 5 x 10⁻⁶ Ω⁻¹ x cm⁻¹. Formation of the fibres takes place in an electrostatic field at a potential difference of 120 KV, and the volume flow of the solution per fibre forming element is 0.0025 cm³/s.

The fibres are additionally processed with solvent saturated vapours at the fibre formation zone. A filter material thus obtained is characterised with air flow resistance/pressure drop of 12 Pa and filtration effectiveness of 99.995%.

Examples 3 to 13, again using the present invention, are shown in table 3, wherein the following abbreviations are used:
CPVC - CHLORINATED POLYVINYL CHLORIDE
PS - POLYSTYRENE
SAN - STYRENE/ACRYLONITRILE COPOLYMER
TEAI - TETRAETHYL AMMONIUM IODIDE
Cl⁻- IRON CHLORIDE
TBAI - TETRABUTYL AMMONIUM IODIDE.

The concentration of butyl acetate vapours in work places is 12 mg/m³ to 30 mg/m³. Furthermore, only butyl acetate with a concentration of 3 mg/m³ to 40 mg/m³ segregates into the air from all filter materials, enabling the material to be used in personal safety aids for protecting respiratory organs without detrimental effects to health. This, of course, is in clear contrast to the unwanted by-products shown in example 1, which illustrates the formation of fibres using dichloroethane as a solvent.

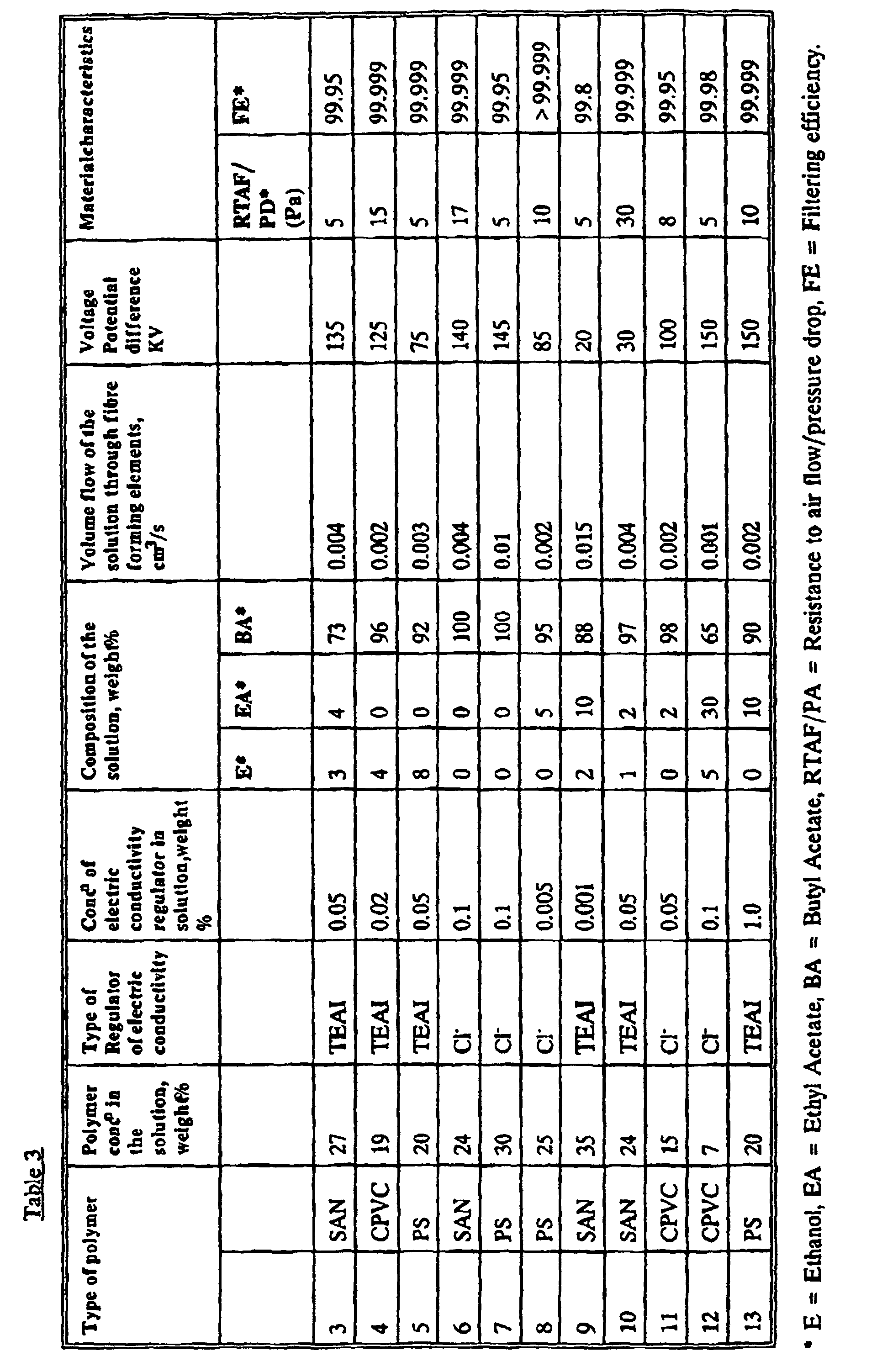

Use of an air/saturated solvent vapour mixture to form the fibres is important for the following reasons. It is of course well known to use air supplied to the die tips in order to stretch the fibres and lay them down onto the formation belt below, which, as is known, has a slightly reduced pressure below it in order to draw the fibres closely onto the belt during the process of melt blowing. The fibres are formed in a fibre formation zone, ie, a field between the external part of each fibre forming element and the belt onto which the fibre web is eventually laid.

It is in this fibre formation zone that extensive evaporation of solvent, occurs from the polymer/solvent solution, and it is here that the diameter of the stream of polymeric solution reduces.

Once the fibre, which consists of polymer and remaining solvent is formed onto the belt, the solvent content of the mixture is typically approximately 5% by weight, and may thus be termed a "dry" fibre, this being the end of the fibre formation process.

In conventional manner, the fibres may possess an electret charge, imparted thereto by the application of an electric potential (negative or positive) to the tip of each fibre forming element.

In accordance with the invention, the use of air flow containing saturated solvent vapours allows the effects of solvent evaporation from the polymer/solvent mixture to be reduced, which in turn enables a high homogeneity of fibres to be obtained with a corresponding reduction in fibre diameter. Such fibre diameter reduction allows the filtering efficiency of the material to be increased, and it is thus clear that the use of an air/saturated solvent vapour mixture is important in attaining the required properties of the fibrous material. The addition of an electrical conductivity regulator enables the electrical conductivity of the solution to be increased by electrolytic dissociation of the regulator. Good electrical conductivity of the solution imparts an electrostatic charge to the fibres as they are drawn out, which results in an electret charge on the fibrous material once the manufacture thereof has been completed.

The features disclosed in the foregoing description expressed in their specific forms or in terms of a means for performing the disclosed function, or a method or process for attaining the disclosed result, or a class or group of substances or compositions, as appropriate, may, separately or in any combination of such features, be utilised for realising the invention in diverse forms thereof.

## Claims

1. A method for making a fine fibrous/micro fibrous filter material with fibres having a stable electret charge wherein fibres are formed in an electrostatic field from a solution having a solution dynamic viscosity of 0.1 to 3.5 Pa·s, a solution electrical conductivity of 10⁻⁸ to 10⁻⁴ Ω⁻¹ x cm⁻¹, a potential difference of 25 to 150 KV, and a volume flow of solution of 10⁻³ to 2 x 10⁻² cm³ x s⁻¹ per fibre forming element, and wherein additional processing of the fibres takes place using saturated vapours of the solution in the fibre formation zone.

2. A method for making a fine fibrous/micro fibrous filter material according to claim 1 **characterised by** the formation of fibres in the electrostatic field from a solution having the following weight proportion content:
fibre forming polymer 5 to 35%
regulator of electric conductivity 0.001 to 1%
solvent remainder
wherein chlorinated polyvinyl chloride and/or polystyrene and/or styrene/acrylonitrile copolymer are used as the fibre forming polymer; tetraethyl ammonium iodide or tetrabutyl ammonium iodide or iron chloride are used as the regulator of electrical conductivity; and a mixture of ethyl acetate, butyl acetate, and ethanol in the following proportions is used as a solvent;
ethyl acetate 0 to 30%
ethanol 0 to 10%
butyl acetate remainder.

## Patentansprüche

1. Verfahren zur Herstellung eines feinfaserigen/mikrofaserigen Filtermaterials mit Fasern mit einer stabilen Elektretladung, wobei die Fasern in einem elektrostatischen Feld aus einer Lösung mit einer dynamischen Lösungsviskosität von 0,1 bis 3,5 Pa·s, einer elektrischen Lösungsleitfähigkeit von 10⁻⁸ bis 10⁻⁴ Ω⁻¹ x cm⁻¹, einer Potentialdifferenz von 25 bis 150 kV und einem Lösungsvolumenstrom von 10⁻³ bis 2 x 10⁻² cm³ x s⁻¹ pro Faserbildungselement gebildet werden und wobei zusätzliche Bearbeitung der Fasern unter Verwendung von gesättigten Dämpfen der Lösung in der Faserbildungszone stattfindet.

2. Verfahren zur Herstellung eines feinfaserigen/mikrofaserigen Filtermaterials nach Anspruch 1, **gekennzeichnet durch** die Bildung von Fasern im elektrostatischen Feld aus einer Lösung mit dem folgenden Gewichtsanteilgehalt:
faserbildendes Polymer 5 bis 35%
Regulator der elektrischen Leitfähigkeit 0,001 bis 1%
Rest Lösungmittel
wobei chloriertes Polyvinylchlorid und/oder Polystyrol und/oder Styrol/Acrylnitril-Copolymer als das faserbildende Polymer verwendet werden; Tetraethylammoniumiodid oder Tetrabutylammoniumiodid oder Eisenchlorid als der Regulator der elektrischen Leitfähigkeit verwendet werden; und eine Mischung aus Ethylacetat, Butylacetat und Ethanol in den folgenden Anteilen als ein Lösungsmittel verwendet wird:
Ethylacetat 0 bis 30%
Ethanol 0 bis 10%
Rest Butylacetat.

## Revendications

1. Procédé pour fabriquer une matière de filtre fine fibreuse/microfibreuse avec des fibres ayant une charge d'électret stable, selon lequel les fibres sont formées dans un champ électrostatique d'une solution ayant une viscosité dynamique de solution de 0,1 à 3,5 Pa-s, une conductivité électrique de solution de 10⁻⁸ à 10⁻⁴ Ω⁻¹ x cm⁻¹, une différence de potentiel de 25 à 150 kV, et un débit volumique de solution de 10⁻³ à 2 x 10⁻² cm³ x s⁻¹ par élément de formation de fibres, et selon lesquelles un traitement additionnel des fibres a lieu en utilisant des vapeurs saturées de la solution dans la zone de formation des fibres.

2. Procédé pour fabriquer une matière de filtre fine fibreuse/microfibreuse selon la revendication 1, **caractérisé par** la formation de fibres dans le champ électrostatique d'une solution ayant la teneur en proportion de poids suivante :
polymère de formation de fibres 5 à 35%
régulateur de conductivité électrique 0,001 à 1%
résidu de dissolvant
selon lequel du chlorure de polyvinyle chloruré et/ou du polystyrène et/ou un copolymère de styrène/acrylonitrile sont utilisés comme polymère de formation de fibres ; l'iodide d'ammonium tétraéthyle ou l'iodide d'ammonium tétrabutyle ou le chlorure de fer sont utilisés comme régulateur de conductivité électrique ; et un mélange d'acétate d'éthyle, d'acétate de butyle et d'éthanol dans les proportions suivantes est utilisé comme dissolvant :
acétate d'éthyle 0 à 30%
éthanol 0 à 10%
résidu d'acétate de butyle.
